(19) Europäisches Patentamt
European Patent Office
Office européen des brevets

(11) Publication number: **0 149 789**
**A2**

(12) # EUROPEAN PATENT APPLICATION

(21) Application number: **84115249.9**

(22) Date of filing: **12.12.84**

(51) Int. Cl.⁴: **C 08 L 69/00**
//(C08L69/00, 83:04)

(30) Priority: **20.12.83 US 563467**

(43) Date of publication of application:
**31.07.85 Bulletin 85/31**

(84) Designated Contracting States:
**DE FR GB IT NL**

(71) Applicant: **GENERAL ELECTRIC COMPANY**
**1 River Road**
**Schenectady New York 12305(US)**

(72) Inventor: **Belfoure, Edward Louis**
**R.R. No. 1, Box 37**
**New Harmony Indiana 47631(US)**

(74) Representative: **Schüler, Horst, Dr. et al,**
**Kaiserstrasse 41**
**D-6000 Frankfurt/Main 1(DE)**

(54) **Copolyestercarbonate composition.**

(57) A composition comprising an aromatic copolyestercarbonate in admixture with an impact resistance improving and resistance to organic solvent improving effective amount of an organosiloxane containing polymer.

EP 0 149 789 A2

Croydon Printing Company Ltd.

TITLE MODIFIED
see front page

# COMPOSITION

## BACKGROUND OF THE INVENTION

Copolyestercarbonates are well known copolymers having both ester and carbonate linkages. Copolyestercarbonates derived from dihydric phenols, dicarboxylic acids or ester forming reactive derivatives thereof and carbonate precursors provide polymers useful in many applications. The polymers formed from aromatic dicarboxylic acids or their ester forming reactive derivatives are particularly useful. However, not all the properties of the copolyestercarbonate are generally as high as desirable. Certain properties should be improved while maintaining to a high degree a substantial number of the remaining properties so as to broaden the applications of the polymer.

It has now been discovered that the impact resistance and resistance to organic solvents, particularly high aromatic content gasoline, of a copolyestercarbonate can be substantially improved while maintaining to a significant degree a substantial number of the other properties such as. The impact resistance at extremes of temperature is also substantially improved.

## DESCRIPTION OF THE INVENTION

In accordance with the invention, there is a composition comprising an aromatic copolyestercarbonate in admixture with an impact resistance improving and resistance to organic solvent improving effective amount of an organosiloxane containing polymer.

The copolyestercarbonate usually employed may generally be described as polymers comprising recurring carbonate groups,

$$-O-\overset{\overset{O}{\|}}{C}-O-\quad ,$$

carboxylate groups, $-\overset{\overset{O}{\|}}{C}-O-$ , and aromatic carbo-

cyclic groups in the linear polymer chain, in which at least some of the carboxylate groups and at least some of the carbonate groups are bonded directly to ring carbon atoms of the aromatic carboxylic groups. These copolyestercarbonate compolymers in general, are prepared by reacting a difunctional carboxylic acid or ester forming derivative, a dihydric phenol and a carbonate precursor.

The dihydric phenols useful in formulating the copolyestercarbonates for use herein may be represented by the general formula:

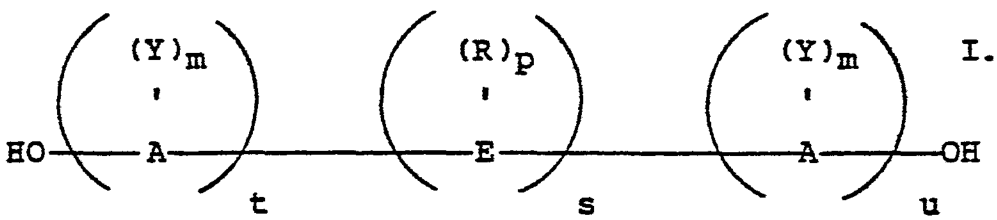

I.

in which A is an aromatic group such as phenylene, biphenylene, naphthylene, anthrylene, etc. E may be an alkylene or alkylidene group such as methylene, ethylene, propylene, propylidene, isopropylidene, butylene, butylidene, isobutylidene, amylene, isoamylene, amylidene, isoamylidine and generally from one to twelve carbon atoms, inclusive, etc. Where E is an alkylene or alkylidene group, it may also consist of two or more alkylene or alkylidene groups, connected by a nonalkylene or non-alkylidene group such as an aromatic linkage, a tertiary amino linkage, an ether linkage, a carbonyl linkage, a silicon-containing linkage, or by a sulfur-containing linkage such as sulfide, sulfoxide, sulfone, etc. In addition, E may be a cycloaliphatic

group of five to seven carbon atoms, inclusive (e.g. cyclopentyl, cyclohexyl), or a cycloalkylidene of five to seven carbon atoms inclusive, such as cyclohexylidene, a sulfur containing linkage, such as sulfide, sulfoxide or sulfone; an ether linkage; a carbonyl group; a tertiary nitrogen group, or a silicon containing linkage such as silane or siloxy. Other groups which E may represent will occur to those skilled in the art. R is hydrogen or a monovalent hydrocarbon group such as alkyl of one to eight carbon atoms, inclusive (methyl, ethyl, propyl, etc.), aryl (phenyl, naphthyl, etc.), aralkyl (benzyl, ethylpehnyl, etc.) or cycloaliphatic of five to seven carbon atoms, inclusive (cyclopentyl, cyclohexyl, etc.). Y may be an inorganic atom such as chlorine, bromine, fluorine, etc.; an organic group such as the nitro group, etc.; an organic group such as R above, or an oxy group such as OR, it being only necessary that Y be inert to and unaffected by the reactants and the reaction conditions. The letter m is any whole number from and including zero through the number of positions on A available for substitution; p is any whole number from and including zero through the number of available positions on E; t is a whole number equal to at least one, S is either zero or one, and u is any whole number including zero.

In the dihydric phenol compound represented by Formula II above, when more than one Y substituent is present, they may be the same or different. The same is true for the R substituent. Where s is zero in Formula II and u is not zero, the aromatic rings are directly joined with no intervening alkylene or other bridge. The positions of the hydroxyl groups and Y on the aromatic nuclear residues A can be varied in the ortho, meta, or para positions and the groupings can be in a vicinal, asymmetrical or symmetrical relationship,

where two or more ring carbon atoms of the aromatic hydrocarbon residue are substituted with Y and hydroxyl group.

Examples of dihydric phenol compounds that may be employed in this invention include:

2,2-bis-(4-hydroxyphenyl)propane (bisphenol-A);
2,4'-dihydroxydiphenylmethane;
bis-(2-hydroxyphenyl)methane;
bis-(4-hydroxyphenyl)methane;
bis-(4-hydroxy-5-nitrophenyl)methane;
bis-(4-hydroxy-2,6-dimethyl-3-methoxyphenyl)-methane;
1,1-bis-(4-hydroxyphenyl)ethane;
1,2-bis-(4-hydroxyphenyl)ethane;
1,1-bis-(4-hydroxy-2-chlorophenyl)ethane;
1,1-bis-(2,5-dimethyl-4-hydroxyphenyl)ethane;
1,3-bis-(3-methyl-4-hydroxyphenyl)propane;
2,2-bis-(3-phenyl-4-hydroxyphenyl)propane;
2,2-bis-(3-isopropyl-4-hydroxyphenyl)propane;
2,2-bis-(4-hydroxynaphthyl)propane;
2,2-bis-(4-hydroxyphenyl)pentane;
3,3-bis-(4-hydroxyphenyl)pentane;
2,2-bis-(4-hydroxyphenyl)heptane;
bis-(4-hydroxyphenyl)phenylmethane;
bis-(4-hydroxyphenyl)cyclohexylmethane;
1,2-bis-(4-hydroxyphenyl)-1,2-bis-(phenyl)propane;
2,2-bis-(4-hydroxyphenyl)-1-phenylpropane; and the like. Also included are dihydroxybenzenes typified by hydroquinone and resorcinol, dihydroxydiphenyls such as 4,4'-dihydroxydiphenyl; 2,2'-dihydroxydiphenyl; 2,4'-dihydroxydiphenyl; dihydroxy-naphthalenes such as 2,6-dihydroxynaphthalene, etc.

Also useful are dihydric phenols wherein E is a sulfur containing radical such as the dihydroxy aryl sulfones exemplified by: bis-(4-hydroxyphenyl)sulfone;

2,4'-dihydroxydiphenyl sulfone; 5-chloro-2,4'-dihydroxydiphenyl sulfone; 3-chloro-bis-(4-hydroxyphenyl) sulfone; and 4,4'-dihydroxytriphenyldisulfone; etc. The preparation of these and other useful sulfones are described in U.S. 2,288,282. Polysulfones as well as substituted sulfones using halogen, nitrogen, alkyl radicals, etc. are also useful.

Dihydroxy aromatic ethers such as those described in U.S. 3,148,172 are useful as the dihydric phenol herein. The dihydroxy aromatic ethers may be prepared as described in U.S. 2,739,171. Illustrative of such compounds are the following:

4,4'-dihydroxydiphenyl ether;
4,4'-dihydroxytriphenyl ether;
the 4,3'-, 4,2'-, 4,1'-, 2,2'-, 2,3'-, etc. dihydroxydiphenyl ethers;
4,4'-dihydroxy-2,6-dimethyldiphenyl ether;
4,4'-dihydroxy-2,5-dimethyldiphenyl ether;
4,4'-dihydroxy-3,3'-diisobutyldiphenyl ether;
4,4'-dihydroxy-3,3'-diisopropyldiphenyl ether;
4,4'-dihydroxy-3,3'-dinitrodiphenyl ether;
4,4'-dihydroxy-3,3'-dichlorodiphenyl ether;
4,4'-dihydroxy-3,3'-difluorodiphenyl ether;
4,4'-dihydroxy-2,3'-dibromodiphenyl ether;
4,4'-dihydroxydinaphthyl ether;
4,4'-dihydroxy-3,3'-dichlorodinaphthyl ether;
2,4-dihydroxytetraphenyl ether;
4,4'-dihydroxypentaphenyl ether;
4,4'-dihydroxy-2,6-dimethoxydiphenyl ether;
4,4'-dihydroxy-2,5-diethoxy-diphenyl ether, etc.

Mixtures of the dihydric phenols can also be employed and where dihydric phenol is mentioned herein, mixtures of such materials are considered to be included.

In general, any difunctional carboxylic acid or its reactive derivative such as the acid halide conventionally used in the preparation of polyesters may be used for the preparation of polyestercarbonates useful in formulating the compositions of the present invention. In general, the carboxylic acids which may be used include the aliphatic carboxylic acids, aliphatic aromatic carboxylic acids, or aromatic carboxylic acids. The aromatic dicarboxylic acids or their reactive derivatives such as the aromatic diacid halides are preferred as they produce the aromatic polyestercarbonates which are most useful, from the standpoint of physical properties, in the practice of the instant invention.

These carboxylic acids may be represented by the general formula:

$$R^2 - (R^1)_q - COOH \qquad \text{II}$$

wherein $R^1$ represents an alkylene, alkylidene or cycloaliphatic group in the same manner as set out above for E in Formula I; an alkylene, alkylidene or cycloaliphatic group containing ethylenic unsaturation; an aromatic radical such as phenylene, naphthylene, bisphenylene, substituted phenylene, etc.; two or more aromatic groups connected through non-aromatic linkages such as those defined by E in Formula II; or a divalent aliphatic aromatic hydrocarbon radical such as an aralkyl or alkaryl radical. $R^2$ is either a carboxyl or a hydroxyl group. The letter q represents the integer one where $R^2$ is a hydroxyl group and either zero or one where $R^2$ is a carboxyl group. Thus the difunctional carboxylic acid will either be a monohydroxy monocarboxylic acid or a dicarboxylic acid. For purposes of the present invention the aromatic dicarboxylic acids or their reactive derivatives such as, for example, the acid halides, are preferred. Thus in these preferred aromatic dicarboxylic acids, as represented by Formula II, $R^2$ is a carboxyl group and $R^1$ is an aromatic radical such as phenylene, biphenylene, naphthylene, substituted phenylene, etc., two or more aromatic groups connected through non-aromatic linkages; or a divalent aliphatic aromatic radical. Some nonlimiting examples of suitable preferred aromatic dicarboxylic acids which may be used in preparing the the copolyestercarbonate resins of the instant invention include phthalic acid, isophthalic acid, terephthalic acid, homophthalic acid, o-, m-, and p-phenylenediacetic acid, the polynuclear aromatic acids such as diphenic acid, and 1,4-naphthalic acid. The aromatics may be substituted with Y groups in the same manner as the formula I aromatics are substituted.

These acids may be used individually or as mixtures of two or more different acids.

The carbonate precursor may be either a carbonyl halide, a carbonate ester, or a haloformate. The carbonyl halides which can be employed herein are carbonyl chlorides and carbonyl bromide. Typical of the carbonate esters which may be employed herein are diphenyl carbonate, di(halophenyl)carbonates such as di(chlorophenyl)carbonate, di(bromophenyl)carbonate, di(trichlorophenyl)carbonate, di(tribromophenyl)carbonate, etc., di(alkylphenyl)carbonates such as di(tolyl carbonate, etc., di(naphthyl)carbonate, di(chloronaphthyl)carbonate, phenyltolyl carbonate, chloronaphthyl chlorophenyl carbonate, and the like. The haloformates suitable for use herein include bishaloformates of dihydric phenols such as bischloroformates of hydroquinone, etc. or glycols such as bis-haloformates of ethylene glycol, neopentyl glycol, polyethylene glycol, etc. While other carbonate precursors will occur to those skilled in the art, carbonyl chloride, also known as phosgene is preferred.

The preparation of copolyestercarbonates which may be employed in the compositions of the present invention is described in U.S. Patent Nos. 3,030,331; 3,169,121; 3,207,814; 4,194,038 and 4,156,069.

The copolyestercarbonates which are preferred in the practice of the present invention include the aromatic polyestercarbonates derived from dihydric phenols, aromatic dicarboxylic acids or their reactive derivatives such as the aromatic diacid halides, and phosgene. A particularly useful class of aromatic copolyestercarbonates is that derived from bisphenol-A, isophthalic acid, terephthalic acid, or a mixture of isophthalic acid and terephthalic acid, or the reactive derivatives of these acids such as terephthaloyl dichloride, isophthaloyl dichloride, or a mixture of isophthaloyl dichloride and terephthaloyl dichloride, and phosgene. The molar proportion of ester units in the copolyestercarbonate is generally from about 25 to 90 mole percent and preferably about 35 to 80 mole percent. The molar range of terephthalate units, the remainder of the copolymer preferably comprising isophthalate units is from about 3 to 90 percent, and preferably from about 5 to about 25 percent.

The organosiloxane containing polymer which is employed in the admixture with the copolyestercarbonate can be used in admixture as a homopolymer or in the form of a copolymer. Other comonomer units which can be employed include dihydric phenols, carboxylic acids or ester forming derivatives thereof as well as carbonate precursors such as phosgene. These homo and copolymers are readily prepared as disclosed in Goldberg

U.S.P. 2,999,835 and Goldberg U.S.P. 2,999,845, each incorporated by reference. Examples of suitable polysiloxanepolycarbonate block copolymers include those disclosed in Molari U.S.P. 4,027,072 and Molari U.S.P. 4,123,588, each incorporated by reference. Any of the siloxane containing copolymers include random, block or random block copolymers can be employed.

The siloxane repeating unit appearing in the homopolymer or copolymer is generally 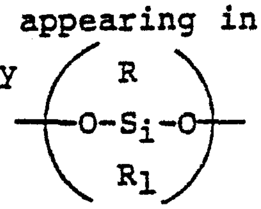

wherein R is hydrogen; alkyl of one to ten carbon atoms, inclusive; phenyl; phenyl substituted alkyl of one to ten carbon atoms; inclusive, or mono, di or tri alkyl substituted phenyl, each alkyl having one to ten carbon atoms, inclusive. $R_1$ is the same or different as R and is alkyl of one to ten carbon atoms, inclusive; phenyl; phenyl substituted alkyl of one to ten carbon atoms; inclusive, mono, di or tri alkyl substituted phenyl, each alkyl having one to ten carbon atoms, inclusive. It is preferable that R and $R_1$ are the same or different and are alkyl of one to three carbon atoms inclusive; phenyl, or phenyl substituted alkyl of one to three carbon atoms, inclusive, most preferably methyls.

Methods of preparing the siloxane containing polymers are disclosed in the aforementioned incorporated patents. Commercially available siloxane homopolymers include dimethyl siloxanes and diphenyl siloxanes, available from General Electric Company.

Other resins may also be present in the admixture and are useful in further upgrading either the normal impact resistance or the impact resistance after exposure to gasoline or both. Examples of such resins include polycarbonate, preferably made from dihydric

phenols as exemplified with respect to the copolyestercarbonate of this application. A particularly preferred dihydric phenol is bisphenol-A. Other resins include polyarylates, polyamides and the like. Generally less than 50 weight percent of the resins in the compositions is comprised of the additional resin, for example, aromatic polycarbonate.

The quantity of siloxane which can be employed is am amount effective to increase the impact resistance before and after exposure to high aromatic content, unleaded gasoline. This content is generally from about 2 weight percent or higher of the copolyestercarbonate and polycarbonate present. The maximum amount is determined by the effect of the siloxane on other properties. Generally, a maximum of about 5-6 weight percent need not be exceeded. Improvements in impact resistance at temperature extremes, for example, -20°C. and 300°F are also observed.

The following examples are intended to illustrate the inventive concept. They are not intended to narrow the broad concept in any manner.

EXAMPLE 1

An aromatic copolyestercarbonate was prepared from bisphenol-A, phosgene, isophthaloyl chloride, terephthaloyl chloride and t-butyl phenol chain stopper.. The resulting polymer had an ester content of about 80 mole percent. The phthalate content was 93% isophthalate and 7% terephthalate. The resin was combined with additive quantities of a phosphite, thermal stabilizer, an epoxy hydrolytic stabilizer and a carboxylic acid ester mold release agent and designated "HIPEC" in Table I. It was then combined with various quantities of the components of Table I and extruded at 550°F. The extruded pellets are then injection molded into parts at 650°F molding temperature. The polycarbonate

employed was a bisphenol-A polycarbonate of intrinsic viscosity 0.53-0.63, designated PC in Table I. The siloxane employed is a 50:50 weight composition polydimethylsiloxane and bisphenol-A polycarbonate random block copolymer.

The test system employed for notched Izod (N.I.) and Double Gate (D.G.) was ASTM D256. The molded parts were tested for gasoline resistance by immersion in high aromatic content, unleaded Amoco® Super Premium gasoline for a period of two hours while on a stress jig exerting 3400 psi. The impact resistance is tested after drying overnight at room temperature. Notched Izod is reported ft.lb/in. of notch. Double gate is reported in ft.lbs. Test results are also reported for Tensile Yield, Tensile Break, Tensile Elongation, both Flexural yield and Flexural modulus. The units and test measurements were in accordance with ASTM D638 (Tensile properties) and D790 (Flexural properties). DTUL in °C is also reported. All formulations below are in weight percent and calculated as HIPEC/HIPEC+PC, PC/HIPEC+PC. The weight percent of DMS/dimethylsiloxane) only refers to the quantity of dimethylsiloxane in the composition. The superscript refers to the percent ductility at break. Zero is a completely brittle break. An H refers to a hinged break which is considered to be better than a brittle break but not as good as a ductile break.

TABLE I

| SAMPLE | HIPEC | DMS | PC | N.I. 1/8" | N.I. 1/4" | D.G. | N.I. GASOLINE 1/8" | N.I. GASOLINE 1/4" |
|---|---|---|---|---|---|---|---|---|
| A | 100 | 0 | 0 | $10^{0}$ | $2^{0}$ | | breaks on jig | |
| B | 100 | 1 | 0 | $9.5^{0}$ | $3.2^{0}$ | $27^{0}$ | $0.8^{0}$ | $0.9^{50H}$ |
| C | 100 | 3 | 0 | $9.2^{100}$ | $7.5^{60H}$ | | $8.7^{100}$ | $4.25^{0}$ |
| D | 100 | 6 | 0 | $8.7^{100}$ | $7.3^{100H}$ | $4.8^{80H}$ | $9.3^{100}$ | $4^{100H}$ |
| E | 0 | 1 | 100 | $16.3^{100}$ | $13.7^{100}$ | $>29.8^{100}$ | $1.3^{100H}$ | $0.5^{50}$ |
| F | 0 | 3 | 100 | $17.7^{100}$ | $15.32^{100}$ | $22.8^{100}$ | $10.5^{100}$ | $3.3^{100}$ |
| G | 0 | 4 | 100 | $17.7^{100}$ | $15.2^{100}$ | $18.8^{100}$ | $12.1^{100}$ | $4.2^{100}$ |
| H | 0 | 6 | 100 | $16.3^{100}$ | $13.7^{100}$ | $6.5^{0}$ | $1.3^{100H}$ | $3.9^{0}$ |
| I | 80 | 3 | 20 | $10.8^{100}$ | $9.00^{100}$ | | $11.33^{100}$ | $3.2^{0}$ |
| J | 60 | 3 | 40 | $13.1^{100}$ | $10.7^{100}$ | | $13.0^{100}$ | $3.2^{0}$ |
| K | 20 | 3 | 80 | $15.7^{100}$ | $3.8^{100}$ | $12.7^{100}$ | $9.5^{50}$ | $3.1^{100}$ |

As demonstrated in Table I, small quantities of dimethylsiloxane markedly increase the notched Izod impact strength and ductility in 1/4 inch pieces before and after immersion in gasoline and increases ductility in the 1/8 inch part prior to immersion. The addition of up to about 50 weight percent polycarbonate in place of copolyestercarbonate also raises the value of the impact resistance in all pieces before and after immersion in gasoline except the 1/4 inch part after immersion. The ductility in the 1/4 inch before immersion and 1/8 inch part after immersion is also raised to 100%. These results compare well with the straight 100% polycarbonate, Samples E to H, which have high impact strength and ductility.

Of particular interest is that this upgrading of copolyestercarbonate can be generally achieved with very little downgrading of other measured properties. Below in Table II are other measured properties for specific samples. All tensile measurements are in psi.

TABLE II

| SAMPLE | DTUL°C | TENSILE YIELD | TENSILE BREAK | TENSILE ELONGATION FLEX.YIELD | FLEX.MOD |
|---|---|---|---|---|---|
| C | 157.8 | 9714 | 10600 | 13960 | 292600 |
| I | 156.6 | 9451 | 10750 | 13690 | 294500 |
| J | 149.4 | 9256 | 9815 | 13520 | 299400 |
| K | 140.5 | 8811 | 9744 | 13010 | 301000 |
| F | 134.3 | 8686 | 9794 | 12930 | 306200 |

The very important DTUL shows little loss with the addition of the polycarbonate resin, at least with less than about 50 weight percent polycarbonate. The other properties also show very little loss in their values.

WHAT IS CLAIMED IS:

1. A composition comprising an aromatic copolyestercarbonate in admixture with an impact resistance improving and resistance to organic solvent improving effective amount of an organosiloxane containing polymer.

2. The composition of claim 1 wherein the copolyestercarbonate has from about 25 to 90 mole percent ester bonds.

3. The composition of claim 2 wherein the copolyestercarbonate has from about 35 to 80 mole percent ester bonds.

4. The composition of claim 2 wherein the copolyestercarbonate is prepared from a dihydric phenol, a carbonate precursor, terephthalic acid or ester forming derivative and isophthalic acid or ester forming derivative.

5. The composition of claim 4 wherein dihydric phenol is bisphenol A and the carbonate precursor is phosgene.

6. The composition of claim 5 wherein the terephthalic acid or ester forming derivative is about 5 to 25 percent of the ester units.

7. The composition of claim 1 wherein the organopolysiloxane containing polymer is a copolymer.

8. The composition of claim 7 wherein the organopolysiloxane is dimethylsiloxane.

9. The composition of claim 1 wherein the amount of organopolysiloxane is from about one to about six percent of the other resins in the composition.

10. The composition of claim 9 wherein the amount is from about two to about five percent.

11. The composition of claim 4 wherein the amount of organopolysiloxane is from about one to about six percent.